# EUROPÄISCHE PATENTSCHRIFT

(11) **EP 0 898 805 B1**
(45) Veröffentlichungstag und Bekanntmachung des Hinweises auf die Patenterteilung: **02.01.2002**
(21) Anmeldenummer: 97923779.9
(22) Anmeldetag: 30.04.1997
(51) Int. Cl.: H02K 3/34

(54) **LEITERWICKLUNGSANORDNUNG FÜR EINE ELEKTRISCHE GROSSMASCHINE**
CONDUCTOR WINDING ARRANGEMENT FOR HEAVY ELECTRIC MACHINES
SYSTEME D'ENROULEMENT CONDUCTEUR POUR MACHINES ELECTRIQUES DE GRANDE PUISSANCE

(30) Priorität: 15.05.1996 DE 19619724
(43) Veröffentlichungstag der Anmeldung: 03.03.1999
(73) Patentinhaber: Voith Siemens Hydro Power Generation GmbH & Co. KG, 89522 Heidenheim (DE)
(72) Erfinder: WEDDE, Gerhard, D-45473 Mülheim an der Ruhr (DE); THIEMANN, Ingo, D-46238 Bottrop (DE); SCHULTEN, Michael, D-44879 Bochum (DE)
(74) Vertreter: Dr. Weitzel & Partner
(86) Internationale Anmeldenummer: DE9700894
(87) Internationale Veröffentlichungsnummer: WO9743817

(56) Entgegenhaltungen:
- DE-A- 4 219 064
- US-A- 2 412 851
- US-A- 4 274 025
- PATENT ABSTRACTS OF JAPAN vol. 014, no. 413 (E-0974), 6.September 1990 & JP 02 156605 A (HITACHI LTD), 15.Juni 1990,
- PATENT ABSTRACTS OF JAPAN vol. 008, no. 239 (E-276), 2.November 1984 & JP 59 117435 A (FUJI DENKI SOUGOU KENKYUSHO:KK), 6.Juli 1984,

## Beschreibung

Die Erfindung betrifft eine Leiterwicklungsanordnung für eine elektrische Großmaschine, welche Leiterwicklungsanordnung mit einem Füllstoff imprägnierbar ist, einen Trägerkörper und zumindest ein Wicklungselement aufweist, das zumindest einen elektrischen Leiter beinhaltet, der von einer Isolierung umhüllt ist, die ihrerseits von einer Schutzschicht umgeben ist.

In der WO 91/01059 A1 und der WO 93/06646 A1 ist jeweils eine Leiterwicklungsanordnung für eine elektrische Großmaschine mit einem ferromagnetischen und elektrisch leitfähigen Trägerkörper und Wicklungselementen beschrieben, die insbesondere für die Verwendung in einer elektrischen Großmaschine mit einer elektrischen Leistungsaufnahme oder -abgabe von mehr als etwa 20 MVA vorgesehen ist. Ein in einer solchen Anordnung vorhandenes Wicklungselement hat einen Grundkörper mit zumindest einem elektrischen gut leitfähigen Metalldraht oder Metallstab, insbesondere mit einer Vielzahl derartiger Metallstäbe. Der Grundkörper ist von einer Isolierung umgeben, die von einer elektrisch halbleitfähigen Schutzschicht umhüllt ist. Die Isolierung besteht aus einem mit einem Füllstoff zu imprägnierenden oder imprägnierten, Glimmer enthaltenen Material, welches üblicherweise ein auf den Grundkörper aufgewickeltes Band auf der Basis von Feinglimmer ist. Als Füllstoff findet ein Kunstharz, vorzugsweise ein heißhärtendes Epoxidharz-System, z.B. ein heißhärtendes Gemisch aus einem Epoxidharz und einem Säure-Anhydrit Verwendung. Ein Grundkörper eines Wicklungselementes ist stabförmig, insbesondere in etwa gerade mit abgebogenen Enden, sowie als Formspule aus aufgewickelten Drähten ausgeführt. Im Wege des sogenannten Ganztränkverfahrens wird zunächst der Trägerkörper mit den Wicklungselementen, die mit einer ungetränkten imprägnierbaren Isolierung umwickelt sind, ohne vorherige Füllstofftränkung komplett montiert und anschließend als Ganzes imprägniert. Hierzu wird ein dünnflüssiger Füllstoff verwendet, der bei einer unter Druck stattfindenden Imprägnierung jeden in der Anordnung verbleibenden Spalt ausfüllt. Nach erfolgter Aushärtung ist die Leiterwicklungsanordnung ein einziger kompakter Festkörper. Mit einer ganzgetränkten Leiterwicklungsanordnung werden hervorragende elektrische Eigenschaften, insbesondere hohe Qualität der Dielektrika gewährleistet. Darüber hinaus kann der ausgehärtete Füllstoff zur Fixierung der Wicklungselemente in den Nuten beitragen, so daß die Anforderung an Nutverschlußmitteln unter Umständen beträchtlich reduziert ist.

Bei einem in einer Nut eines Trägerkörpers eingelegten imprägnierten Wicklungselement ist aus obigen Schriften bekannt, daß bereits bei der Imprägnierung mit Füllstoff und der darauf folgenden Aushärtung des Füllstoffes sowie bei einem späteren Betrieb in einer elektrischen Großmaschine Temperaturwechsel zwischen üblichen Umgebungstemperaturen und deutlich über 100 °C auftreten können. Aufgrund voneinander abweichender thermischer Ausdehnungskoeffizienten von Trägerkörper und Füllstoff können thermische Spannungen, die zur Bildung von Rissen führen, auftreten. Durch solche Risse oder Spalte kann einerseits die Festigkeit der gesamten Wicklung beeinträchtigt werden und andererseits können in den Spalten beim Betrieb der elektrischen Großmaschine Glimmentladungen (Korona-Entladungen) auftreten, die sowohl die Qualität des Dielektrikums beeinträchtigen, als auch im Laufe der Zeit zu einer Schädigung der Isolierung führen. Um eine solche Schädigung zu verhindern ist in der WO 91/01059 A1 vorgesehen, zwischen die die Isolierung umhüllende elektrisch schwachleitende Schutzschicht und eine weitere halbleitende Schutzschicht eine Trennschicht einzufügen, welche eine verringerte durch den Füllstoff bedingte Verklebung der beiden elektrisch schwachleitenden Schutzschichten bewirkt. Die Trennschicht kann entweder mit dem Material der einen oder der anderen schwachleitenden Schicht vereinigt sein. Die Trennschicht beinhaltet ein Trennmittel, welches von dem Füllstoff nicht benetzt wird. Für den Fall, daß als Füllstoff ein Kunstharz Verwendung findet, ist das Trennmittel beispielsweise eine ölige oder fettartige Substanz, Polytetrafluoräthylen, Silikonmasse oder ähnliches. Das Trennmittel wird hierbei einem geeigneten Träger, vorzugsweise einer Textilie oder einer Folie beigegeben, wobei letztere durch geeignete Zusätze elektrisch halbleitfähig gemacht sein können. Durch das Einlegen der Trennschicht zwischen zwei elektrisch halbleitfähigen Schichten entsteht eine elektrisch abgeschirmte Zone, deren mechanische Festigkeit im Vergleich zu anderen Zonen des in eine Nut eingelegten Wicklungselementes vermindert ist. Risse im Füllstoff, die beispielsweise durch thermische Ausdehnungs- und Schrumpfprozesse hervorgerufen werden, treten bevorzugt in dieser Zone verminderter Festigkeit auf. Die gezielt zur Rißbildung neigende Zone (Sollbruchstelle) ist gut definiert, und es treten in ihr keine nennenswerten elektrischen Potentialgefälle auf, so daß eine Funkenbildung in den Rissen praktisch ausgeschlossen und eine Beeinträchtigung der elektrischen Qualität der Anordnung vermieden ist.

In der DE 42 19 064 A1 ist eine Glimmschutzanordnung für die Statorwicklung einer elektrischen Maschine beschrieben. Die Glimmschutzanordnung besteht dabei aus zwei übereinander liegenden leitfähigen Schichten, wobei die erste Schicht zu einer Hauptisolation von einem Imprägnierharz vollständig durchtränkt ist und gut an der Hauptisolation haftet. Die zweite Schicht hingegen ist so mit einem das Imprägnierharz abweisenden Mittel behandelt, daß die zweite Schicht weder mit der ersten Schicht noch mit Nutwänden verklebt. Hierdurch sind zwei zueinander parallele leitfähige Schichten hergestellt, zwischen denen eine eventuelle Trennung als Folge thermischer Dehnungen erfolgen kann.

In der DE 36 36 008 A1 ist eine elektrische Maschine mit einer in Ganztränktechnik hergestellten Statorwicklung mit aus gegeneinander isolierten zu Wicklungsstäben zusammengefaßten Teilleitern beschrieben. Diese sind von einer Hauptisolierung umgeben in Nuten des Statorblechkörpers angeordnet und von Nutkeilen in radialer Richtung fixiert. Eine Bewegung der Wicklungsstäbe in radialer Richtung wird dadurch verhindert, daß die Nutkeile durch ein Tränkharz fest mit dem Statorblechkörper verklebt sind. Hierdurch wird das der DE 36 36 008 A1 zugrundeliegende Problem gelöst, welches darin besteht, daß bei einer Erwärmung oder Abkühlung der elektrischen Maschine große Dehnungsdifferenzen zwischen der Hauptisolierung und den Statorblechen auftreten, die von den Verklebungsstellen nicht aufgenommen werden können, so daß lokale Abrisse und Lockerungen auftreten. Bei hohen Maschinenleistungen treten zudem hauptsächlich in radialer Richtung wirkende Stromkräfte in den Leitern und in den Blechpaket-Nuten auf, so daß diese nach anfänglicher Lockerung mit doppelter Netzfrequenz vibrieren können. Als Folge könnte eine mechanische Zerstörung der Hauptisolierung und letztlich ein Ausfall der elektrischen Maschine auftreten. Die Wicklungsstäbe sind allseitig von einem Gleitbelag umgeben, der nach Imprägnierung und Aushärtung des während des Ganztränkverfahrens eingebrachten Tränkharzes keine Klebeverbindung mit der Hauptisolierung aufweist. Der Gleitbelag besteht aus band- oder bahnenförmigem Vlies oder Gewebe, welches mit einem Harz getränkt ist, das leitende Füllstoffe, z.B. Graphitpulver, zur Erzielung einer erforderlichen elektrischen Leitfähigkeit des Gleitbetrages enthält. Glimmentladungen werden durch einen gegebenenfalls vorzusehenden Außen- bzw. Nutglimmschutz verhindert, um welchen der Gleitbelag angeordnet ist. Die Leitfähigkeit des Gleitbetrages ist so, daß pro Flächeneinheit ein Oberflächenwiderstand in der Größenordnung von 1 kOhm bis 25 kOhm erzielt wird. Der Gleitbelag ist aus einem Glasfaservlies oder Gewebe gefertigt, das mit Silikonharz, dem die leitenden Füllstoffe beigemengt sind, getränkt ist.

Da das Tränkharz aus einem Epoxid- oder Polyesterharz gefertigt ist, soll wegen der unterschiedlichen Tränkharzbasis des Gleitbelages eine Verklebung mit der Hauptisolierung vermieden sein. Dadurch daß keine Verklebung zwischen dem Gleitbelag und der Hauptisolierung stattfindet, können sich die Wicklungsstäbe in axialer Richtung in der Nut frei ausdehnen.

Aufgabe der Erfindung ist es, eine Leiterwicklungsanordnung für eine elektrische Großmaschine mit einem Wicklungselement anzugeben, welches zumindest einen elektrischen Leiter aufweist, der insbesondere im Falle einer Reparatur der Leiterwicklungsanordnung einfach herausnehmbar ist.

Erfindungsgemäß wird die Aufgabe bei einer Leiterwicklungsanordnung dadurch gelöst, daß der elektrische Leiter von einer Isolierung umhüllt ist, welche ihrerseits von einer ersten Schutzschicht umgeben ist, die wiederum von einer zweiten Schutzschicht umgeben ist, wobei die einander zugewandten Oberflächen der Schutzschichten als Antihaftoberflächen ausgeführt sind, die im wesentlichen haftungsfrei, d.h. mit geringem Reibungswiderstand, aneinandergrenzen. Die Isolierung kann eine Hochspannungsisolierung sein.

Durch die geringe Haftung der Oberflächen aneinander, welche auch im Falle einer vollständigen Imprägnierung der Leiterwicklungsanordnung mit einem Füllstoff gegeben bleibt, ist der elektrische Leiter mit der Isolierung und der sie umgebenden ersten Schutzschicht einfach aus der Leiterwicklungsanordnung, insbesondere im Falle einer Reparatur, herausnehmbar. Der umwickelte elektrische Leiter ist insbesondere deshalb so einfach aus der Leiterwicklungsanordnung herausnehmbar, da der Reibungswiderstand zwischen den beiden aneinandergrenzenden Antihaft-Oberflächen so gering ist, daß selbst bei elektrischen Leitern mit einer Länge von mehreren Metern die Haft- und Gleitreibung zwischen den Schutzschichten hinreichend klein ist. Trennschichten sowie Gleitbeläge nach dem Stand der Technik sind hingegen immer einer Fläche mit erhöhtem Reibungswiderstand benachbart sowie zumindest bereichsweise mit einer solchen Oberfläche verklebt, wodurch die für ein Herausnehmen des elektrischen Leiters erforderlichen Zugkräfte sehr hoch sind. Weiterhin vorteilhaft ist es, daß die Schutzschichten eine geringere Schichtdicke als bekannte Schutzschichten, insbesondere Außenglimmschutz-Anordnungen, aufweisen, wodurch eine bessere Wärmeübertragung durch die Schutzschichten hindurch gewährleistet ist. Dies erlaubt auch bei gleicher Breite der Nuten bekannter Trägerkörper eine Ausführung einer Isolierung, insbesondere einer Hochspannungs-Isolierung, mit größerer Schichtdicke, so daß eine Isolierung mit verbesserter Wärmeleitfähigkeit Verwendung finden kann. Hierzu eignet sich beispielsweise eine Isolierung aus wärmeleitfähigem Feinglimmer-Glasgewebebändern.

Vorzugsweise sind beide Schutzschichten jeweils schwach elektrisch leitend und bilden einen Außenglimmschutz für die Isolierung. Schwach elektrisch leitend bedeutet in diesem Zusammenhang, daß der spezifische Oberflächenwiderstand jeder Schutzschicht in einem Bereich zwischen 2 kOhm und 100 kOhm, vorzugsweise zwischen 50 kOhm und 30 kOhm, beträgt. Hierdurch ist eine hinreichende Potentialsteuerung gewährleistet sowie das Auftreten von Glimmentladungen vermieden.

Jede Schutzschicht hat vorzugsweise eine Schichtdicke von 50 µm bis 150 µm, insbesondere 100 µm. Hierdurch ist die gesamte Schichtdicke eines durch die Schutzschichten gebildeten Außenglimmschutzes auf 0,1 mm bis 0,3 mm reduziert. Eine solch geringe Schichtdicke gewährleistet einen guten Wärmeübergang zwischen dem elektrischen Leiter, insbesondere einem kupfernen stabförmigen Vollkörper, und dem Trägerkörper, bestehend aus einem Blechpaket. Dies führt auch zu einer reduzierten thermischen Belastung der Leiterwicklungsanordnung, was zu einer Lebensdauerverlängerung beitragen kann.

Die erste Schutzschicht besteht vorzugsweise aus einem Band oder mehreren Bändern, die um die Isolierung einlagig gewikkelt sind. Das Band weist vorzugsweise ein tränkfähiges Vlies auf, welches zur Herstellung der Antihaft-Oberfläche mit einem entsprechenden nichtverklebbaren Material beschichtet oder getränkt ist. Hierdurch wird eine Wärmebeständigkeit der Schutzschicht von bis zu über 180 °C erreicht, wodurch eine damit gebildete Leiterwicklungsanordnung selbst für den Einsatz in gasgekühlten, insbesondere durch Luft oder Wasserstoff gekühlten, Turbogeneratoren mit einer Leistung von bis zu über 400 MVA geeignet ist. Der Antihaft-Oberfläche des Bandes liegt vorzugsweise eine Haft-Oberfläche gegenüber, die einen größeren Reibungskoeffizienten aufweist. Bei einer Herausnahme des elektrischen Leiters aus der Leiterwicklungsanordnung ist somit sichergestellt, daß die zweite Schutzschicht in der Nut verbleibt, während die erste Schutzschicht mit dem elektrischen Leiter zusammen nahezu reibungsfrei aus der Leiterwicklungsanordnung herausziehbar ist. Das insbesondere elektrisch schwachleitende Band ist vorzugsweise halbüberlappend auf die Isolierung aufgewickelt. Durch eine nur teilweise Selbstüberlappung des Bandes hat dieses über seine Haft-Oberfläche einen ständigen Reibkontakt mit der Isolierung. Hierdurch ist das Band gegenüber der Isolierung nahezu unverrückbar, so daß es selbst bei einem Herausziehen des elektrischen Leiters um die Isolierung herum verbleibt.

Eine zusätzliche Befestigung des Bandes mit der Isolierung wird dadurch erreicht, daß zumindest die Haftoberfläche, wenn nicht sogar ein Großteil der Schutzschicht, durch einen die Leiterwicklungsanordnung imprägnierenden Füllstoff mit der Isolierung verklebbar ist. Der Füllstoff ist vorzugsweise ein Epoxidharz. Selbstverständlich sind für den Füllstoff sämtliche geeignete Materialien anwendbar, die insbesondere für eine Ganztränkung die geforderte Viskosität, eine entsprechende thermomechanische Langzeitbeständigkeit und eine entsprechende elektrische Isolationsfähigkeit aufweisen.

Die zweite Schutzschicht ist vorzugsweise ebenfalls ein Band, das um die erste Schutzschicht gewickelt ist. Das Band kann wie das bereits für die erste Schutzschicht beschriebene Band aufgebaut sein, wobei die jeweiligen Antihaft-Oberflächen der Bänder mit dem geringen Reibungskoeffizienten einander benachbart sind.

Die zweite Schutzschicht kann alternativ auch an einer Wandung der Nut angeordnet sein, insbesondere die Nut vollständig auskleiden. Hierbei entfällt eine zusätzliche Bewicklung des elektrischen Leiters mit der zweiten Schutzschicht, wodurch gegebenenfalls ein verringerter Platzbedarf pro elektrischem Leiter erreicht wird. Dies ermöglicht es, die Leiterwicklungsanordnung für eine vorgegebene Belastbarkeit entweder besonders kompakt auszuführen oder aber nach weiteren Gesichtspunkten, z.B. hinsichtlich der Funktion der elektrischen Großmaschine auszubilden. Auch kann dadurch eine Isolierung mit verbesserter Wärmeleitfähigkeit bei gleicher Nutgröße eingesetzt werden.

Die erste Schutzschicht und/oder die zweite Schutzschicht weist bzw. weisen zumindest an der Antihaft-Oberfläche ein Trennmittel auf, z.B. Silikonharz, Polytetrafluoräthylen oder ähnliches, welches durch ein Tränkharz, insbesondere ein Epoxidharz, weitgehend nicht verklebbar ist. Solche unverklebbare Trennmittel sind beispielsweise in der DE 36 36 008 A1 beschrieben. Der Füllstoff ist vorzugsweise ein Tränkharz, beispielsweise ein aushärtbarer Kunstharz, mit dem die Leiterwicklungsanordnung imprägniert ist. Als Füllstoff eignen sich sämtliche Materialien, die entsprechend der Anforderungen an die elektrische Großmaschine eine hinreichende Isolationsfähigkeit, eine geringe Viskosität sowie eine hinreichende thermomechanische Langzeitbeständigkeit aufweisen.

Die Leiterwicklungsanordnung eignet sich vorzugsweise für eine Verwendung in einem Stator oder einem Läufer einer elektrischen Großmaschine, insbesondere eines Turbogenerators, mit einer elektrischen Leistungsaufnahme oder -abgabe von über 20 MVA.

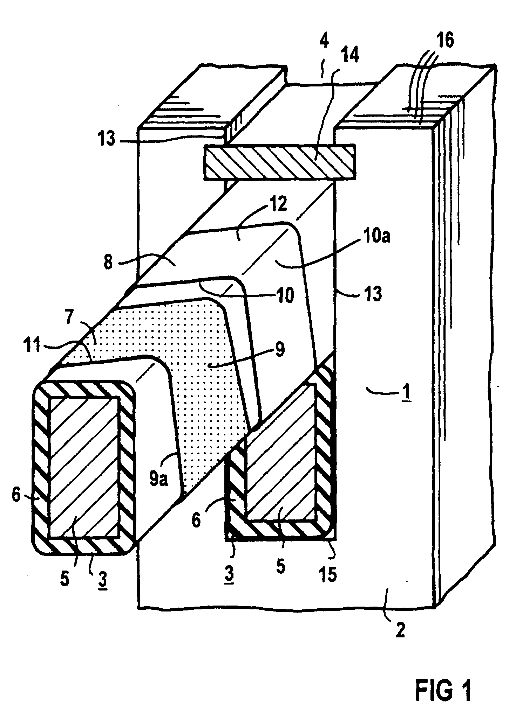

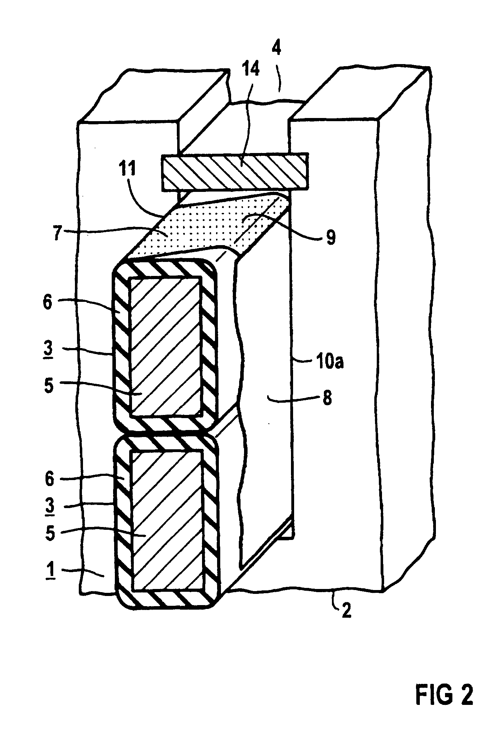

Anhand der in der Zeichnung dargestellten Ausführungsbeispiele erfolgt eine nähere Erläuterung der Erfindung, wobei lediglich die für die Erläuterung notwendigen Komponenten einer Leiterwicklungsanordnung dargestellt sind. Die Ausführungsbeispiele sind zur Hervorhebung der für die Erläuterung wesentlichen Merkmale ggf. leicht schematisiert und/oder verzerrt dargestellt. Im einzelnen zeigen
- FIG 1 und FIG 2: in einem Trägerkörper angeordnete Wicklungselemente.

In FIG 1 ist ein Ausschnitt einer Leiterwicklungsanordnung 1 mit einem ferromagnetischen und elektrisch leitfähigen, aus aufeinandergeschichteten Statorblechen 16 gebildeten Trägerkörper 2 mit zwei Wicklungselementen 3, die in eine Nut 4 des Trägerkörpers 2 eingelegt sind, dargestellt. Die Nut 4 ist mit einem Nutverschlußmittel 14 verschlossen. Jedes Wicklungselement 3 weist einen elektrischen Leiter 5 auf, der von einer Hochspannungsisolierung 6 umgeben ist. In jedem Wicklungselement 3 ist ein nicht-strukturierter elektrischer Leiter 5 dargestellt. Dieser Leiter 5 kann insbesondere für eine dynamoelektrische Großmaschine eine Vielzahl von Metallstäben oder Metalldrähten enthalten, wovon eventuell einige hohl zur Führung eines Kühlfluides, wie z.B. Luft, Wasserstoff oder Wasser sind, wie es beispielsweise in der DE 36 36 008 A1 dargestellt ist. Die Isolierung 6 ist mit einem elektrisch schwach leitfähigen Band 11 umwickelt, welches zumindest teilweise selbst überlappend ist. Das Band 11 bildet eine erste Schutzschicht 7, die Bestandteil eines Außenglimmschutzes zur Verhinderung von Glimmentladungen ist. Das Band 11 hat eine Haft-Oberfläche 9a, die der Isolierung 6 zugewandt ist, und eine Haftung zwischen der Isolierung 6 und der ersten Schutzschicht 7 bewirkt. Der Haft-Oberfläche 9a gegenüberliegend weist das Band 11 eine Antihaft-Oberfläche 9 auf, die einen geringen Reibungskoeffizienten hat sowie durch einen Füllstoff, wie beispielsweise einen Epoxidharz, nicht verklebbar ist. Das Band 11, zumindest die Antihaft-Oberfläche 9, weist hierzu insbesondere ein Trennmittel auf, welches mit dem Füllstoff nicht verklebbar ist, beispielsweise ein Silikonharz oder Polytetrafluoräthylen. Um die erste Schutzschicht 7 herum ist ein weiteres Band 12 mit einer Haft-Oberfläche 10a und einer dieser gegenüberliegenden Antihaft-Oberfläche 10 gewickelt. Das Band 12 ist eine zweite Schutzschicht 8, die die Isolierung 6 umgibt. Die Wicklung des Bandes 12 erfolgt hierbei so, daß die Antihaft-Oberfläche 10 an der Antihaft-Oberfläche 9 des Bandes 11 anliegt. Mit der Haft-Oberfläche 10a liegt das Band 12 an einer Wandung 13 und/oder dem Nutgrund 15 der Nut 4 an oder ist mit diesen durch einen Füllstoff verklebbar. Das Band 12 ist ebenfalls schwach elektrisch leitfähig und bildet eine elektrisch schwach leitfähige Brücke zwischen der ersten Schutzschicht 7 und dem Trägerkörper 2, welcher insbesondere ein Stator einer elektrischen Großmaschine ist. Selbst bei einer Imprägnierung der Leiterwicklungsanordnung 1 mit einem Füllstoff, insbesondere einem Epoxidharz, bei der sämtliche verbleibende Hohlräume der Nut 4 sowie die imprägnierbare Hochspannungs-Isolierung 6 von dem Füllstoff ausgefüllt bzw. durchtränkt werden, liegen die einander zugeordneten Antihaft-Oberflächen 9, 10 nahezu haftungsfrei aneinander. Somit ist bei einer vollständig imprägnierten Leiterwicklungsanordnung 1 ein leichtes und einfaches Herausziehen des elektrischen Leiters 5 mit Isolierung 6 und erster Schutzschicht 7 sichergestellt. Dies wird insbesondere dadurch erreicht, daß zwischen den Schutzschichten 7, 8 allenfalls geringe Haftkräfte oder andere mechanische Verbindungen bestehen, so daß ein nahezu reibungsfreies Gleiten der Schutzschichten 7, 8 gegeneinander erreicht ist.

In FIG 2 ist eine analog zu FIG 1 aufgebaute Leiterwicklungsanordnung 1 dargestellt - insofern sei auf die Erläuterung zu FIG 1 verwiesen - wobei eine alternative Ausführung der zweiten Schutzschicht 8 dargestellt ist. Die zweite Schutzschicht 8, welche wiederum eine Antihaft-Oberfläche 10 aufweist, die einer entsprechenden Antihaft-Oberfläche 9 der ersten Schutzschicht 7 zugewandt ist, liegt, ohne um einen elektrischen Leiter 5 gewickelt zu sein, zwischen einer Wandung 13 der Nut 4 und/oder dem Nutgrund 15 und den dargestellten elektrischen Leitern 5. Die zweite Schutzschicht 8 ist somit eine nahezu vollständige Auskleidung der Nut 4. Die Haft-Oberfläche 10a ist wiederum der Nutwandung 15 zugewandt, so daß eine Haftung bzw. eine Verklebung der zweiten Schutzschicht mit dem Trägerkörper 2 gewährleistet. Somit ist ebenfalls in axialer Richtung des elektrischen Leiters 5 eine nahezu freie Beweglichkeit zwischen dem elektrischen Leitern 5 und dem Trägerkörper 2 gegeben. Dies ist insbesondere bei einer in Folge einer Reparatur erforderlichen Herausnahme der elektrischen Leiter 5 aus der Nut 4 von Vorteil.

Die erfindungsgemäße Leiterwicklungsanordnung aus einem insbesondere ferromagnetischen und elektrisch leitfähigen Trägerkörper und Wicklungselementen jedweder Ausbildung ist den Anforderungen des Ganztränkverfahrens zur Herstellung einer Komponente für eine elektrische Großmaschine, insbesondere eines Stators, sowohl im Hinblick auf die erforderlichen Herstellungsaufwendungen als auch im Hinblick auf die betrieblichen Belastungen, in besonderer Weise angepaßt. Die Erfindung zeichnet sich dadurch aus, daß der Außenglimmschutz einer einen elektrischen Leiter umgebenden Isolierung durch zwei jeweils elektrisch schwach leitfähige Schutzschichten gebildet wird. Diese bewirken über elektrisch leitfähige Brücken einen Potentialabbau zwischen der Isolierung und einem Trägerkörper. Die Schutzschichten sind weitgehend frei, insbesondere reibungsfrei, gegeneinander in axialer Richtung des elektrischen Leiters verschieblich. Diese Verschieblichkeit wird dadurch erreicht, daß die einander zugewandten Oberflächen der Schutzschichten antihaftend sind sowie einen geringen Reibungskoeffizienten aufweisen. Zumindest im Bereich der jeweiligen Antihaft-Oberflächen sind die Schutzschichten durch einen Füllstoff, insbesondere einen Epoxidharz nicht verklebbar, so daß selbst nach einer Imprägnierung der elektrischen Leiter in einer Nut eines Trägerkörpers diese freie Verschieblichkeit der Schutzschichten untereinander gewährleistet bleibt. Weiterhin kann der Außenglimmschutz durch die Verwendung der zwei Schutzschichten eine geringe Schichtdicke von beispielsweise unter 0,2 mm aufweisen, wodurch bei vorgegebener Breite einer Nut die Schichtdicke der HochspannungsIsolierung entsprechend groß sein kann. Dadurch kann als Material für die Isolierung ein wärmeleitfähiges Feinglimmerband oder ein ähnliches wärmeleitfähiges Material verwendet werden. Hierdurch ist eine Leiterwicklungsanordnung mit besonders guter Wärmeleitfähigkeit erreicht, was einhergeht mit einer vergrößerten elektrischen Leistungsaufnahme oder -abgabe bei einer besonders kompakten Ausführung einer elektrischer Großmaschine, insbesondere eines Turbogenerators.

## Patentansprüche

1. Leiterwicklungsanordnung (1), die mit einem Füllstoff imprägnierbar ist, für eine elektrische Großmaschine mit einem Trägerkörper (2) und zumindest einem Wicklungselement (3), das in eine zugehörige Nut (4) des Trägerkörpers (2) eingelegt ist, wobei das Wicklungselement (3) zumindest einen elektrischen Leiter (5) aufweist, der von einer Isolierung (6) umhüllt ist, welche ihrerseits von einer ersten Schutzschicht (7) umgeben ist, die wiederum von einer zweiten Schutzschicht (8) umgeben ist,
**dadurch gekennzeichnet, daß**
die erste Schutzschicht (7) mit einer äußeren Antihaft-Oberfläche (9) unmittelbar an eine innere Antihaft-Oberfläche (10) der zweiten Schutzschicht (8) angrenzt und die Antihaft-Oberflächen (9, 10) im wesentlichen haftungsfrei aneinanderliegen.

2. Leiterwicklungsanordnung (1) nach Anspruch 1, bei der die erste Schutzschicht (7) und die zweite Schutzschicht (8) jeweils schwach elektrisch leitend sind und einen Außenglimmschutz für die Isolierung (6) bilden.

3. Leiterwicklungsanordnung (1) nach Anspruch 1 oder 2, wobei jede Schutzschicht (8, 9) eine Schichtdicke von 50 µm bis 150 µm, insbesondere 100 µm, aufweist.

4. Leiterwicklungsanordnung (1) nach einem der vorhergehenden Ansprüche, bei der die erste Schutzschicht (7) als Band (11) um die Isolierung (6) gewickelt ist, welches Band (11) eine der Antihaft-Oberfläche (9) gegenüberliegende Haft-Oberfläche (9a) mit einem größeren Reibungskoeffizienten als die Antihaft-Oberfläche (9) aufweist.

5. Leiterwicklungsanordnung (1) nach Anspruch 4, bei der die Haft-Oberfläche (9a) mit einem Füllstoff, insbesondere auf Epoxidharzbasis, verklebbar ist.

6. Leiterwicklungsanordnung (1) nach einem der vorhergehenden Ansprüche, bei der die zweite Schutzschicht (7) als Band (12) um die erste Schutzschicht (7) gewickelt ist, welches Band (12) eine der Antihaft-Oberfläche (10) gegenüberliegende Haft-Oberfläche (10a) mit einem größeren Reibungskoeffizienten als die Antihaft-Oberfläche (10) aufweist.

7. Leiterwicklungsanordnung (1) nach Anspruch 6, bei der die Haft-Oberfläche (9a) mit einem Füllstoff, insbesondere auf Epoxidharzbasis, verklebbar ist.

8. Leiterwicklungsanordnung (1) nach Anspruch 6 oder 7, bei der die Bänder (11, 12) der ersten Schutzschicht (7) und der zweiten Schutzschicht (8) gleich sind.

9. Leiterwicklungsanordnung (1) nach einem der Ansprüche 1 bis 5, bei der die zweite Schutzschicht (8) an einer Wandung (13) der Nut (4) angeordnet ist.

10. Leiterwicklungsanordnung (1) nach einem der vorhergehenden Ansprüche, bei der die erste Schutzschicht (7) und/oder die zweite Schutzschicht (8) zumindest an der Antihaft-Oberfläche (9, 10) ein durch ein Tränkharz, insbesondere ein Epoxidharz, weitgehend unverklebbares Trennmittel, z.B. ein Silikonharz, ein Polytetrafluoräthylen, aufweisen bzw. aufweist.

11. Leiterwicklungsanordnung (1) nach einem der vorhergehenden Ansprüche, die mit einem Füllstoff, insbesondere einem ausgehärteten Kunstharz, imprägniert ist.

12. Leiterwicklungsanordnung (1) nach Anspruch 11, in einem Stator oder einem Läufer einer elektrischen Großmaschine, insbesondere eines Turbogenerators.

## Claims

1. Conductor winding arrangement (1) which can be impregnated with a filler, for a heavy electrical machine, with a carrier element (2) and at least one winding element (3) which is inserted in an associated groove (4) of the carrier element (2), the winding element (3) having at least one electrical conductor (5) which is covered by an insulator (6) which in turn is surrounded by a first protective layer (7) which in turn is surrounded by a second protective layer (8), **characterised in that** the first protective layer (7) with an external non-stick surface (9) directly adjoins an internal non-stick surface (10) of the second protective layer (8) and the non-stick surfaces (9, 10) are substantially adjacent to one anther without bonding.

2. Conductor winding arrangement (1) according to claim 1, wherein the first protective layer (7) and the second protective layer (8) respectively are weakly electrically conductive and form an external corona shielding for the insulator (6).

3. Conductor winding arrangement (1) according to claim 1 or 2, wherein each protective layer (8, 9) has a layer thickness of 50 µm to 150 µm, in particular 100 µm.

4. Conductor winding arrangement (1) according to any one of the preceding claims, wherein the first protective layer (7) is wound as a strip (11) round the insulator (6), which strip (11) has an adhesive surface (9a) opposing the non-stick surface (9) and having a higher coefficient of friction than the non-stick surface (9).

5. Conductor winding arrangement (1) according to claim 4, wherein the adhesive surface (9a) can be glued with a filler, in particular based on epoxide resin.

6. Conductor winding arrangement (1) according to any one of the preceding claims, wherein the second protective layer (7) is wound as a strip (12) round the first protective layer (7), which strip (12) has an adhesive surface (10a) opposing the non-stick surface (10) with a higher coefficient of friction than the non-stick surface (10).

7. Conductor winding arrangement (1) according to claim 6, wherein the adhesive surface (9a) can be glued with a filler, in particular based on epoxide resin.

8. Conductor winding arrangement (1) according to claim 6 or 7, wherein the strips (11, 12) of the first protective layer (7) and the second protective layer (8) are identical.

9. Conductor winding arrangement (1) according to any one of claims 1 to 5, wherein the second protective layer (8) is arranged on a wall (13) of the groove (4).

10. Conductor winding arrangement (1) according to any one of the preceding claims, wherein the first protective layer (7) and/or the second protective layer (8) has/have, at least on the non-stick surface (9, 10), a release agent, for example a silicone resin, a polytetrafluoroethylene, which is substantially ungluable owing to an impregnating resin, in particular an epoxide resin.

11. Conductor winding arrangement (1) according to any one of the preceding claims, which is impregnated with a filler, in particular a cured synthetic resin.

12. Conductor winding arrangement (1) according to claim 11, in a stator or a rotor of a heavy electrical machine, in particular a turbo-generator.

## Revendications

1. Système d'enroulement conducteur **(1)** susceptible d'être imprégné par une charge de remplissage, pour une machine électrique de grande puissance, avec un corps support **(2)** et au moins un élément d'enroulement **(3)**, inséré dans une gorge **(4)** afférente du corps support **(2)**, l'élément d'enroulement **(3)** présentant au moins un conducteur électrique **(5)** enveloppé par une isolation **(6)**, qui est entourée, de son côté, par une première couche protectrice **(7)** qui, à son tour, est entourée par une deuxième couche protectrice **(8)**,
**caractérisé en ce que**
la première couche protectrice **(7)** est directement limitrophe, par une surface anti-adhésion **(9)** extérieure, à une surface anti-adhésion **(10)** intérieure de la deuxième couche protectrice **(8)**, et les surfaces anti-adhésion **(9, 10)** sont placées les unes contre les autres pratiquement sans adhésion.

2. Système d'enroulement conducteur **(1)** selon la revendication 1, dans lequel la première couche protectrice **(7)** et la deuxième couche protectrice **(8)** sont chacune faiblement conductrice d'électricité et forment une protection anti-effluves extérieure pour l'isolation **(6)**.

3. Système d'enroulement conducteur **(1)** selon la revendication 1 ou 2, chaque couche protectrice **(7, 8)** ayant une épaisseur de couche de 50 µm à 150 µm, en particulier de 100 µm.

4. Système d'enroulement conducteur **(1)** selon la revendication précédente, dans lequel la première couche protectrice **(7)** est enroulée sous forme de ruban **(11)** autour de l'isolation **(6)**, le ruban **(11)** présentant une surface adhésive **(9a)**, opposée à la surface anti-adhésion **(9)** et ayant un coefficient de frottement supérieur au coefficient de frottement de la surface anti-adhésion **(9)**.

5. Système d'enroulement conducteur **(1)** selon la revendication 4, dans lequel la surface adhésive **(9a)** est susceptible d'être collée avec une charge de remplissage, en particulier une charge à base de résine époxy.

6. Système d'enroulement conducteur **(1)** selon l'une des revendications précédentes, pour lequel la deuxième couche protectrice **(8)** se présentant sous forme de ruban **(12)** est enroulée autour de la première couche protectrice **(7),** le ruban **(12)** présentant une surface adhésive **(10a),** opposée à la surface anti-adhésion **(10)** et ayant un coefficient de frottement supérieur à celui de la surface anti-adhésion **(10).**

7. Système d'enroulement conducteur **(1)** selon la revendication 6, pour lequel la surface adhésive **(10a)** est susceptible d'être collée avec une charge de remplissage, en particulier une charge à base de résine époxy.

8. Système d'enroulement conducteur **(1)** selon la revendication 4 ou 6, pour lequel les rubans **(11, 12)** de la première couche protectrice **(7)** et de la deuxième couche protectrice **(8)** sont identiques.

9. Système d'enroulement conducteur **(1)** selon les revendications 1 à 5, pour lequel la deuxième couche protectrice **(8)** est disposée sur une paroi **(13)** de la gorge **(4)**.

10. Système d'enroulement conducteur **(1)** selon l'une des revendications précédentes, pour lequel la première couche protectrice **(7)** et/ou la deuxième couche protectrice **(8)** présentent, au moins sur la surface anti-adhésion **(9, 10)**, un agent séparateur largement non collable par une résine d'imprégnation, en particulier une résine époxy, par exemple une résine au silicone, un polytétrafluoréthylène.

11. Système d'enroulement conducteur **(1)** selon l'une des revendications précédentes, imprégné par une charge de remplissage, en particulier par une résine synthétique durcie.

12. Système d'enroulement conducteur **(1)** selon la revendication 11, dans un stator ou un rotor d'une machine électrique de grande puissance, en particulier un turbo-générateur.
